(19) Europäisches Patentamt / European Patent Office / Office européen des brevets

(11) **EP 4 067 508 A1**

(12) **EUROPEAN PATENT APPLICATION**
published in accordance with Art. 153(4) EPC

(43) Date of publication:
**05.10.2022 Bulletin 2022/40**

(21) Application number: **20891789.8**

(22) Date of filing: **11.11.2020**

(51) International Patent Classification (IPC):
**C21B 5/00** (2006.01)    **C21B 7/00** (2006.01)

(52) Cooperative Patent Classification (CPC):
**C21B 5/00; C21B 7/00;** Y02P 10/143

(86) International application number:
**PCT/JP2020/042144**

(87) International publication number:
**WO 2021/106578 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2019 JP 2019212514**

(71) Applicant: **JFE Steel Corporation
Tokyo 100-0011 (JP)**

(72) Inventors:
• **TAKAHASHI, Koichi
Tokyo 100-0011 (JP)**

• **NOUCHI, Taihei
Tokyo 100-0011 (JP)**
• **OZAWA, Sumito
Tokyo 100-0011 (JP)**
• **KAWASHIRI, Yuki
Tokyo 100-0011 (JP)**
• **MORITA, Yuya
Tokyo 100-0011 (JP)**

(74) Representative: **Grünecker Patent- und
Rechtsanwälte
PartG mbB
Leopoldstraße 4
80802 München (DE)**

(54) **BLAST FURNACE OPERATION METHOD AND BLAST FURNACE ANCILLARY EQUIPMENT**

(57)    Provided is a method of operating a blast furnace, having generating a regenerative methane gas from a by-product gas discharged from the blast furnace, and blowing a blast gas and a reducing agent into the blast furnace from a tuyere of the blast furnace in which the blast gas is oxygen gas and the regenerative methane gas is used as at least part of the reducing agent.

FIG. 1

EP 4 067 508 A1

**Description**

TECHNICAL FIELD

The present disclosure relates to a method of operating a blast furnace and a blast furnace ancillary facility.

BACKGROUND

In recent years, there has been a strong need to reduce carbon dioxide ($CO_2$) emissions against the backdrop of global environmental issues. Therefore, operation with a low reducing agent rate (low RAR) is required in operating a blast furnace installed in a steelworks.

In a typical blast furnace, hot blast (air heated to about 1200 °C) is blown into the blast furnace as a blast gas from a tuyere. As a result, oxygen in the hot blast reacts with coke or pulverized coal as a reducing agent to produce carbon monoxide (CO) and hydrogen ($H_2$) gases. These carbon monoxide and hydrogen gases reduce iron ore charged into the blast furnace. In addition, carbon dioxide is produced during the reduction reaction of the iron ore.

The blast gas is a gas that is blown into the blast furnace from the tuyere. The blast gas also plays a role in gasifying the pulverized coal and coke in the blast furnace.

As a technique to reduce carbon dioxide emissions in blast furnace operations, a technique has been proposed to reform the carbon monoxide and carbon dioxide contained in the by-product gas emitted from the blast furnace, etc., to produce hydrocarbons such as methane and ethanol, and to introduce the produced hydrocarbons back into the blast furnace as a reducing agent.

For example, JP2011-225969A (PTL 1) describes:
"a method of operating a blast furnace comprising a step (A) of separating and recovering $CO_2$ and/or CO from a mixed gas containing $CO_2$ and/or CO, a step (B) of adding hydrogen to the $CO_2$ and/or CO separated and recovered in the step (A) and converting the $CO_2$ and/or CO into $CH_4$, a step (C) of separating and removing $H_2O$ from the gas that has undergone the step (B), and a step (D) of blowing the gas that has undergone the step (C) into the blast furnace".

JP2014-005510A (PTL 2) describes:
"a method of operating a blast furnace comprising separating $CO_2$ from an exhaust gas of a combustion furnace that uses a blast furnace by-product gas as the whole or a part of fuel, reforming the separated $CO_2$ into methane to obtain a reducing gas, and blowing the reducing gas into the blast furnace".

CITATION LIST

Patent Literature

   PTL 1: JP 2011-225969A
   PTL 2: JP 2014-005510A

SUMMARY

(Technical Problem)

However, with the techniques of PTLs 1 and 2, when the amount of methane blown into the blast furnace as the reducing agent exceeds a certain level, it may cause operational problems such as insufficient heating of the bottom of the blast furnace, pressure drop increase, and tapping failure.

Therefore, there is a need to develop a method of operating a blast furnace that can further reduce carbon dioxide emissions from the blast furnace under stable operation.

In view of the current situation described above, it could be helpful to provide a method of operating a blast furnace that can further reduce carbon dioxide emissions from the blast furnace under stable operation.

It could also be helpful to provide a blast furnace ancillary facility for use in the method of operating a blast furnace described above.

(Solution to Problem)

We conducted intensive studies to achieve the objects stated above.

First, we examined the cause of operational problems occurring when the amount of methane blown into the blast furnace as a reducing agent exceeds a certain level in the techniques of PTLs 1 and 2.

As a result, we have made the following discoveries.

When the amount of methane blown into the blast furnace as a reducing agent exceeds a certain level, the temperature of flame (hereinafter referred to as tuyere-outlet temperature) generated by the combustion of the blown reducing agent and coke in the combustion area (raceway) near the outlet of the tuyere decreases significantly. The decrease in the tuyere-outlet temperature becomes the cause of the operational problems such as insufficient heating of the bottom of the blast furnace, pressure drop increase, and tapping failure.

In detail, when pulverized coal is blown into the blast furnace from the tuyere as a reducing agent, because the main component of the pulverized coal is carbon, the following reaction occurs in the raceway:

$$C + 0.5O_2 = CO + 110.5 \text{ kJ/mol.}$$

On the other hand, when methane is blown as a reducing agent into the blast furnace from the tuyere, the following reaction occurs in the raceway:

$$CH_4 + 0.5O_2 = CO + 2H_2 + 35.7 \text{ kJ/mol.}$$

The amount of heat generated during the reaction, when converted to one mole of the total amount of CO and $H_2$, is 11.9 kJ/mol.

For stable operation of the blast furnace, it is necessary to control the tuyere-outlet temperature in the range of 2000 °C to 2400 °C. However, if most of the reducing agent blown into the blast furnace is changed to methane gas from pulverized coal, the tuyere-outlet temperature will decrease due to the difference in reaction heat described above. As a result, the tuyere-outlet temperature cannot be controlled within the above range, and various operational problems occur.

Based on the above discoveries, we made further investigations.

As a result, we have made following discoveries. Using oxygen gas instead of hot blast (air heated to about 1200 °C) as the blast gas effectively prevented the decrease in the tuyere-outlet temperature even when a large amount of methane is used as the reducing agent to be blown into the blast furnace. Further, by regenerating such methane from a by-product gas discharged from the blast furnace and blowing the regenerated methane (regenerative methane gas) back into the blast furnace as a reducing agent, stable blast furnace operation can be achieved while further reducing carbon dioxide emissions from the blast furnace.

In addition, the amount of nitrogen contained in the by-product gas discharged from the blast furnace is greatly reduced by using oxygen gas with a particularly high oxygen concentration as the blast gas. As a result, the process of separating carbon monoxide and carbon dioxide from the by-product gas is no longer necessary, which is extremely advantageous in terms of facility compactness.

We believe that the reason why the tuyere-outlet temperature can be controlled in the range of 2000 °C to 2400 °C by using oxygen gas as the blast gas even when a large amount of methane is used as the reducing agent blown into the blast furnace is as follows.

In detail, when hot blast (air heated to about 1200 °C) is used as the blast gas, the combustion gas contains nitrogen of about 50 % by volume, which does not contribute to the combustion reaction, and thus the flame temperature in the raceway is hardly to be high. Therefore, when most of the reducing agent blown into the blast furnace is changed to methane gas from pulverized coal, the difference between the reaction heat in the pulverized coal-oxygen reaction and the reaction heat in the methane gas-oxygen reaction described above will cause the tuyere-outlet temperature to drop, and eventually the tuyere-outlet temperature will fall below 2000 °C, which is the lower limit of the appropriate temperature.

On the other hand, the use of oxygen gas as the blast gas can suppress the mixing of nitrogen gas, which does not contribute to the combustion reaction, so that the tuyere-outlet temperature can be raised to a sufficient temperature. In detail, the flame temperature in the raceway can be made higher than when hot blast is used, so that even when a large amount of methane is blown in as a reducing agent from the tuyere, the tuyere-outlet temperature can be controlled in the range of 2000 °C to 2400 °C, which is the appropriate range.

The present disclosure is based on these discoveries and further studies.

Primary features of the present disclosure are as follows.

1. A method of operating a blast furnace, comprising

generating a regenerative methane gas from a by-product gas discharged from the blast furnace, and
blowing a blast gas and a reducing agent into the blast furnace from a tuyere,
wherein the blast gas is oxygen gas and the regenerative methane gas is used as at least part of the reducing agent.

2. The method of operating a blast furnace according to 1., wherein a consumption rate of circulating carbon atoms in the reducing agent is 60 kg/t or more,

wherein the consumption rate of circulating carbon atoms is a carbon equivalent mass of the regenerative methane gas that is blown into the blast furnace as the reducing agent for producing 1 t of hot metal, and is obtained by the following equation:

$$[\text{Consumption rate of circulating carbon atoms (kg/t)}] = [\text{Mass of methane in regenerative methane gas blown into blast furnace as reducing agent (kg)}] \times (12/16) \div [\text{Production amount of hot metal (t)}].$$

3. The method of operating a blast furnace according to 1. or 2., wherein the oxygen gas has an oxygen concentration of 80 % or more by volume.
4. The method of operating a blast furnace according to any one of 1. to 3., wherein the regenerative methane gas is generated from a part of the by-product gas and a surplus of the by-product gas is supplied to a steelworks.
5. The method of operating a blast furnace according to any one of 1. to 4., wherein a surplus of the regenerative methane gas is supplied to the steelworks.
6. A blast furnace ancillary facility used in the method of operating a blast furnace according to any one of 1. to 5., comprising

a methane gas generation device that generates the regenerative methane gas from the by-product gas, and a gas blowing device having a methane gas supply section that introduces the regenerative methane gas into the tuyere of the blast furnace and an oxygen gas supply section that introduces the oxygen gas into the tuyere of the blast furnace.

(Advantageous Effect)

The present disclosure enables further reduction of carbon dioxide ($CO_2$) emissions from the blast furnace under stable operation. The use of the methane gas generated from the blast furnace by-product gas can also reduce the amount of coke and pulverized coal used, that is, the amount of coal as a finite fossil fuel used.
In addition, since the amount of nitrogen in the by-product gas discharged from the blast furnace is greatly reduced, the process of separating carbon monoxide and carbon dioxide from the by-product gas, or in other words, the huge pressure swing adsorption (PSA) separator or the like is not necessary, which is extremely advantageous in terms of making the facility more compact.

BRIEF DESCRIPTION OF THE DRAWINGS

In the accompanying drawings:

FIG. 1 schematically illustrates an example of a blast furnace and blast furnace ancillary facility used in the method of operating a blast furnace according to one of the disclosed embodiments;
FIGS. 2A and 2B each schematically illustrate an example of a gas blowing device used in the method of operating a blast furnace according to one of the disclosed embodiments;
FIG. 3 schematically illustrates an example of a blast furnace and blast furnace ancillary facility used in the method of operating a blast furnace according to one of the disclosed embodiments;
FIG. 4 schematically illustrates an example of a blast furnace and blast furnace ancillary facility used in the method of operating a blast furnace according to one of the disclosed embodiments;
FIG. 5 schematically illustrates a blast furnace and blast furnace ancillary facility used in a comparative example;
FIG. 6 schematically illustrates a blast furnace and blast furnace ancillary facility used in a comparative example;
FIG. 7 schematically illustrates a blast furnace and blast furnace ancillary facility used in a comparative example; and
FIG. 8 illustrates an example of the relationship between the consumption rate of circulating carbon atoms and the tuyere-outlet temperature for hot blast and oxygen gas blowing conditions.

DETAILED DESCRIPTION

This disclosure will be described below based on the following embodiments.

One of the disclosed embodiments is a method of operating a blast furnace, comprising

generating a regenerative methane gas from a by-product gas discharged from the blast furnace, and
blowing a blast gas and a reducing agent into the blast furnace from a tuyere,
wherein the blast gas is oxygen gas and the regenerative methane gas is used as at least part of the reducing agent.

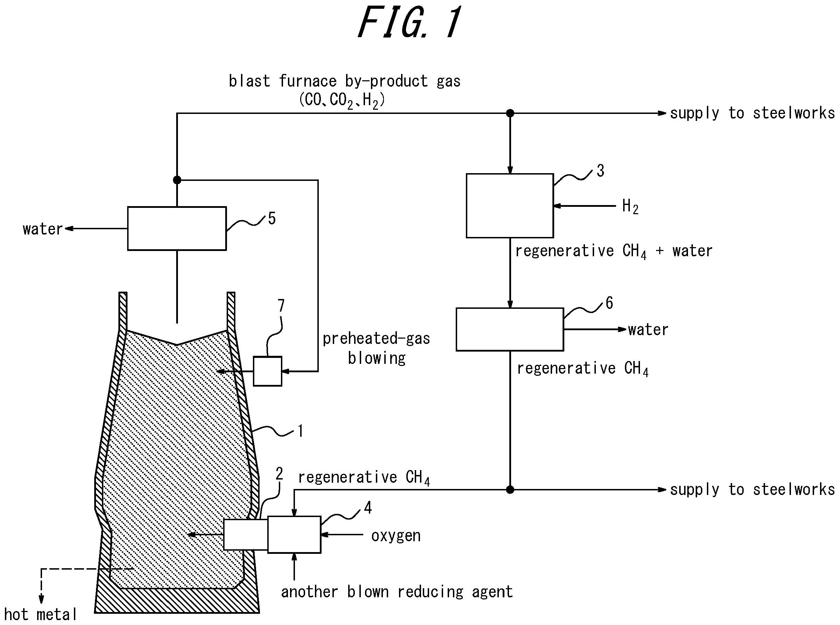

First, the method of operating a blast furnace according to one of the disclosed embodiments will be described, taking as an example the case where the method is applied to the blast furnace and blast furnace ancillary facility schematically illustrated in FIG. 1.

In the figure, reference sign 1 is a blast furnace, 2 is a tuyere, 3 is a methane gas generation device, 4 is a gas blowing device, 5 is a first dehydration device, 6 is a second dehydration device, and 7 is a burner.

As used herein, the term "blast furnace" includes shaft-type reducing furnaces.

[How to operate a blast furnace]

In the method of operating a blast furnace according to one of the disclosed embodiments, sinter, lump ore, and pellet (hereinafter also referred to as ore material), coke, etc., which are raw materials, are charged into the blast furnace from the head of the furnace (not illustrated). In addition, the blast gas and reducing agent are blown into the blast furnace 1 from the tuyere 2 provided at the bottom of the blast furnace. The reducing agent that is blown into the blast furnace 1 from the tuyere 2 is also called "blown reducing agent" to distinguish it from coke.

The carbon monoxide gas and hydrogen gas produced by the reaction between the blast gas and the reducing agent reduce the ore material charged into the blast furnace 1. In the reduction reaction of the ore material, carbon dioxide is produced. The carbon dioxide is then discharged from the head of the blast furnace as the by-product gas, along with the carbon monoxide and hydrogen that have not reacted with the ore material. The head of the blast furnace is under high pressure conditions of about 2.5 atm. Therefore, water vapor condenses due to the expansion and cooling of the by-product gas discharged from the head of the blast furnace (hereinafter also referred to as blast furnace by-product gas) as it returns to normal pressure. The condensate is then removed through the first dehydration device 5.

Then, at least a part of the blast furnace by-product gas is introduced into the methane gas generation device 3. Then, in the methane gas generation device 3, carbon monoxide and carbon dioxide contained in the blast furnace by-product gas are reacted with a hydrogen gas to produce a methane ($CH_4$) gas. Here, the methane gas obtained by reacting the blast furnace by-product gas is referred to as regenerative methane gas.

The hydrogen used to generate the regenerative methane gas may be supplied externally but is preferably produced by a method that generates as little carbon dioxide as possible. For example, electrolysis of water can be used. The hydrogen gas does not have to be a gas with a hydrogen concentration of 100 % by volume, but to achieve a high concentration of methane in the regenerative methane gas, a gas with a high hydrogen concentration, specifically, a hydrogen gas with a hydrogen concentration of 80 % or more by volume is preferably used. The hydrogen concentration is more preferably 90 % or more by volume, and further preferably 95 % or more by volume. The hydrogen concentration may be 100 % by volume. The remainder gas other than hydrogen includes, for example, CO, $CO_2$, $H_2S$, $CH_4$, and $N_2$.

Then, by cooling the regenerative methane gas to room temperature, the water vapor in the regenerative methane gas is condensed. Then, in the second dehydration device 6, the condensate is removed.

Then, the regenerative methane gas is introduced into the gas blowing device 4. The gas blowing device 4 is connected to the methane gas generation device 3 via the second dehydration device 6. The gas blowing device 4 has a methane gas supply section that introduces the regenerative methane gas, which serves as the blown reducing agent, into the tuyere 2 of the blast furnace 1, and an oxygen gas supply section that introduces oxygen gas, which serves as the blast gas, into the tuyere of the blast furnace.

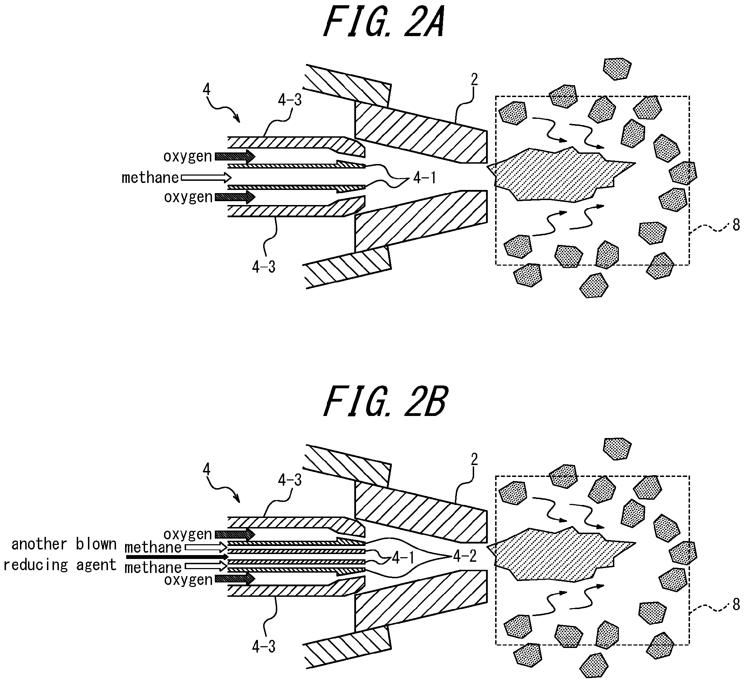

For example, as illustrated in FIG. 2A, the gas blowing device 4 comprises a coaxial multiple pipe having a central pipe 4-1 and an outer pipe 4-3. Then, the methane gas (regenerative methane gas and appropriately, external methane gas as described below) is introduced into the inner passage of the central pipe, which serves as the methane gas supply section (passage), and the oxygen gas is introduced into the annular pipe passage between the central pipe 4-1 and the outer pipe 4-3, which serves as the oxygen gas supply section (passage).

Another blown reducing agent, for example, pulverized coal, waste plastics, or reducing gas such as hydrogen gas or carbon monoxide gas, may be used together. The total blowing amount of the another blown reducing agent into the blast furnace is preferably 150 kg/t or less. Here, the unit of "kg/t" is the amount of the another blown reducing agent blown into the blast furnace in producing 1 t of hot metal.

When the another blown reducing agent is used, it may also be introduced into the methane gas supply section. When using pulverized coal or waste plastics as the another blown reducing agent, it is preferable to provide, separately from the methane gas supply section, another reducing agent supply section (passage) through which the pulverized coal or waste plastics flow. In this case, as illustrated in FIG. 2B, for example, the gas blowing device 3 comprises a coaxial multiple pipe having, in addition to the central pipe 4-1 and outer pipe 4-3, an inner pipe 4-2 provided between the central pipe 4-1 and outer pipe 4-3. Then, the another blown reducing agent such as pulverized coal or waste plastics is introduced from the inner passage of the central pipe, which serves as the another reducing agent supply section. Further, methane gas is introduced from the annular pipe passage between the central pipe 4-1 and the outer pipe 4-3, which is the methane gas supply section, and oxygen is introduced from the annular pipe passage between the inner pipe 4-2 and the outer pipe 4-3, which is the oxygen gas supply section.

Since the use of oxygen gas at room temperature as the blast gas causes poor ignitability, it is preferable to provide the discharge section of the outer pipe that constitutes the oxygen gas supply section of the gas blowing device 4 with a porous structure to promote the mixing of the oxygen gas and the blown reducing agent.

It is not necessary to use the regenerative methane gas for the whole of the methane gas blown into the blast furnace from the tuyere (hereinafter referred to as "blown methane gas"), but a methane gas supplied from a separate line (also referred to as "external methane gas") may be used in accordance with the operation of the steelworks. In this case, a supply line of the external methane gas may be connected to the methane gas supply section of the gas blowing device 4, or to the another reducing agent supply section as described above. The external methane gas supply line may also be connected to the regenerative methane gas flow passage between the methane gas generation device 3 and the gas blowing device 4 (preferably between the second dehydration device 6 and the gas blowing device 4).

The external methane gas includes, for example, a methane gas derived from fossil fuels.

Then, as illustrated in FIGS. 2A and 2B, the blown reducing agent such as blown methane gas and the oxygen gas introduced from the gas blowing device 4 are mixed in the tuyere 2. Immediately after this mixed gas is blown into the blast furnace 1 from the tuyere 2, rapid ignition and rapid combustion occur. Then, a raceway 8 that is an area where the oxygen gas reacts with the blown reducing agent such as blown methane gas and coke is formed in the blast furnace beyond the tuyere 2.

When the oxygen concentration in the blast gas increases, the amount of gas in the furnace decreases, and the temperature rise of the burden at the upper part of the blast furnace may be insufficient. In this case, as illustrated in FIG. 1, it is preferable to perform preheated-gas blowing, in which a part of the blast furnace by-product gas downstream of the first dehydration device 5 is partially combusted by the burner 7 to reach a temperature of about 800 °C to 1000 °C, and then blown into the blast furnace shaft section.

And in the method of operating a blast furnace according to one of the disclosed embodiments, it is important to use oxygen gas instead of hot blast (air heated to about 1200 °C) as the blast gas, as described above.

In detail, when hot blast (air heated to about 1200 °C) is used as the blast gas, the combustion gas contains nitrogen of about 50 % by volume, which does not contribute to the combustion reaction, and thus the flame temperature in the raceway is hardly to be high. Therefore, when most of the reducing agent blown into the blast furnace is changed to methane gas from pulverized coal, the difference between the reaction heat in the pulverized coal-oxygen reaction and the reaction heat in the methane gas-oxygen reaction described above will cause the tuyere-outlet temperature to drop, and eventually the tuyere-outlet temperature will fall below 2000 °C, which is the lower limit of the appropriate temperature. This results in the operational problems such as insufficient heating of the bottom of the blast furnace, pressure drop increase, and tapping failure. Further, since the blast furnace by-product gas contains a large amount of nitrogen, it is necessary to separate the nitrogen from carbon monoxide and carbon dioxide in the process prior to the process of generating methane gas from the blast furnace by-product gas.

On the other hand, the use of oxygen gas as the blast gas can suppress the mixing of nitrogen gas, which does not contribute to the combustion reaction, so that the tuyere-outlet temperature can be raised to a sufficient temperature. This means that the temperature of the flame in the raceway can be higher than when hot blast is used. Therefore, even when a large amount of methane is blown in from the tuyere as a reducing agent, the tuyere-outlet temperature can be controlled in the appropriate range of 2000 °C to 2400 °C.

Based on the above, it is important to use oxygen gas as the blast gas in the method of operating a blast furnace according to one of the disclosed embodiments.

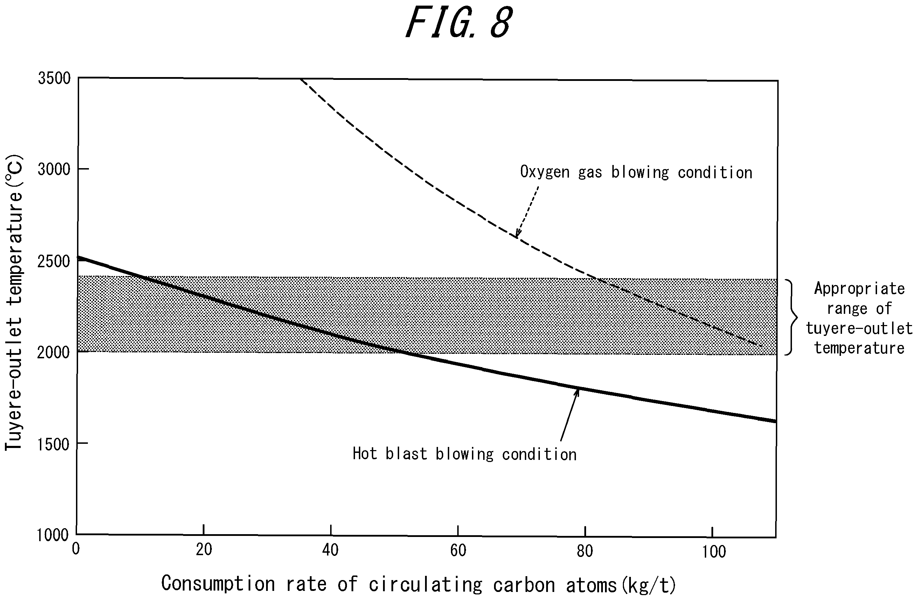

FIG. 8 illustrates, for conditions where hot blast (air heated to about 1200 °C) is used as the blast gas (hereinafter referred to as hot blast blowing condition) and where oxygen gas (oxygen concentration: 100 %) is used as the blast gas (hereinafter referred to as oxygen gas blowing condition), an example of the relationship between the consumption rate of circulating carbon atoms in the reducing agent (hereinafter referred to simply as the consumption rate of circulating carbon atoms) as described below and the tuyere-outlet temperature. In both conditions, the whole of the blown reducing agent is the regenerative methane gas (methane concentration: 99.5 %).

As illustrated in FIG. 8, under the hot blast blowing condition, when the consumption rate of circulating carbon atoms is 52 kg/t or more (i.e., the blowing amount of regenerative methane is 97 Nm$^3$/t or more), the tuyere-outlet temperature falls below 2000 °C, which is the lower limit of the appropriate temperature. Thus, under the hot blast blowing condition commonly used, a consumption rate of circulating carbon atoms of 55 kg/t or more, especially 60 kg/t or more causes a decrease in the tuyere-outlet temperature, which makes stable operation impossible.

On the other hand, under the oxygen gas blowing condition, the tuyere-outlet temperature is kept at 2000 °C or higher even when the consumption rate of circulating carbon atoms is 55 kg/t or higher, or even 60 kg/t or higher.

Under the oxygen gas blowing condition illustrated in FIG. 8, the tuyere-outlet temperature exceeds 2400 °C, which is the upper limit of the appropriate temperature, in the range where the consumption rate of circulating carbon atoms is 55 kg/t to 80 kg/t. This is because the whole of the blown reducing agent is the regenerative methane. When the external methane gas is used as a part of the blown reducing agent, the tuyere-outlet temperature can be controlled in the range of 2000 °C to 2400 °C even when the consumption rate of circulating carbon atoms is in the range of 55 kg/t to 80 kg/t. Even when the whole of the blown reducing agent is the regenerative methane, the tuyere-outlet temperature can be controlled in the range of 2000 °C to 2400 °C by adjusting the oxygen concentration of the oxygen gas.

The oxygen concentration in the oxygen gas is preferably 80 % or more by volume. In detail, when the oxygen concentration in the oxygen gas is low, the amount of gas introduced into the blast furnace, and thus the pressure drop in the blast furnace may increase, resulting in lower productivity. Further, during the repetition of the gas circulation, the concentration of methane gas in the regenerative methane gas decreases relatively. Therefore, the oxygen concentration in the oxygen gas is preferably 80 % or more by volume. The oxygen concentration is more preferably 90 % or more by volume, and further preferably 95 % or more by volume. In particular, when the oxygen concentration is 90 % or more by volume, the methane gas concentration in the regenerative methane gas can be maintained at a high level (about 90 % by volume) without the need for external methane gas supply even when the blast furnace is operated beyond the normal operating period, which is very advantageous. The oxygen concentration may be 100 % by volume.

The remainder gas other than oxygen in the oxygen gas may include, for example, nitrogen, carbon dioxide, and argon.

The methane concentration of the blown methane gas composed of regenerative methane gas or regenerative methane gas and external methane gas is preferably 80 % or more by volume.

In detail, when the methane concentration in the blown methane gas is low, the amount of gas blown into the blast furnace, and thus the pressure drop in the blast furnace may increase, resulting in lower productivity. Further, during the repetition of the gas circulation, the methane concentration in the regenerative methane gas decreases relatively. Therefore, the methane concentration of the blown methane gas is preferably 80 % or more by volume percent. The methane concentration of the blown methane gas is more preferably 90 % or more by volume, and further preferably 95 % or more by volume. The methane concentration of the blown methane gas may be 100 % by volume.

For the same reason, the methane concentration of each of the regenerative methane gas and external methane gas is preferably 80 % or more by volume. The methane concentration of each of the regenerative methane gas and external methane gas is more preferably 90 % or more by volume, and further preferably 95 % or more by volume. The methane concentration of each of the regenerative methane gas and external methane gas may be 100 % by volume.

The remainder gas other than methane in the blown methane gas, regenerative methane gas, and external methane gas may include, for example, carbon monoxide, carbon dioxide, hydrogen and hydrocarbons, and an impurity gas such as nitrogen.

When the methane concentration in the regenerative methane gas decreases, the methane concentration in the blown methane gas can be kept high, by, for example, decreasing the ratio of the regenerative methane gas in the blown methane gas while increasing the ratio of the external methane gas with high methane concentration.

In the method of operating a blast furnace according to one of the disclosed embodiments, the consumption rate of circulating carbon atoms in the reducing agent is preferably 55 kg/t or more and more preferably 60 kg/t or more.

The consumption rate of circulating carbon atoms is a carbon equivalent mass of the regenerative methane gas that is blown into the blast furnace as the reducing agent for producing 1 t of hot metal, and is obtained by the following equation:

$$[\text{Consumption rate of circulating carbon atoms (kg/t)}] = [\text{Mass of methane in regenerative methane gas blown into blast furnace as reducing agent (kg)}] \times (12/16) \div [\text{Production amount of hot metal (t)}].$$

For stable operation of the blast furnace, it is generally necessary to control the tuyere-outlet temperature in the range of 2000 °C to 2400 °C. Therefore, when hot blast (air heated to about 1200 °C) is used as the blast gas, methane gas can be blown into the blast furnace only up to about 52 kg/t of carbon equivalent mass in order to keep the tuyere-outlet temperature in the aforementioned range. In detail, even when the whole of the methane gas blown into the blast furnace is the regenerative methane gas, the consumption rate of circulating carbon atoms in the reducing agent is only about 52 kg/t.

On the other hand, in the method of operating a blast furnace according to one of the disclosed embodiments, even with a significant increase in blowing amount of methane gas, the tuyere-outlet temperature can be controlled in the range of 2000 °C to 2400 °C. Therefore, the consumption rate of circulating carbon atoms in the reducing agent can be increased to 55 kg/t or more, and even 60 kg/t or more. This will increase the use of the regenerative methane gas derived from carbon monoxide and carbon dioxide contained in the blast furnace by-product gas, further reducing carbon dioxide emissions from the blast furnace. The consumption rate of circulating carbon atoms in the reducing agent is preferably 80 kg/t or more, and more preferably 90 kg/t or more. No upper limit is placed on the consumption rate of circulating carbon atoms in the reducing agent, but the upper limit is preferably 110 kg/t or less.

The consumption rate of circulating carbon atoms in the reducing agent can be controlled by adjusting the amount of the regenerative methane gas in the blown reducing agent blown into the tuyere.

In particular, by setting the ratio of the regenerative methane gas in the blown methane gas to 80 % or more by volume, preferably 90 % or more by volume, a high carbon dioxide emission reduction effect can be achieved.

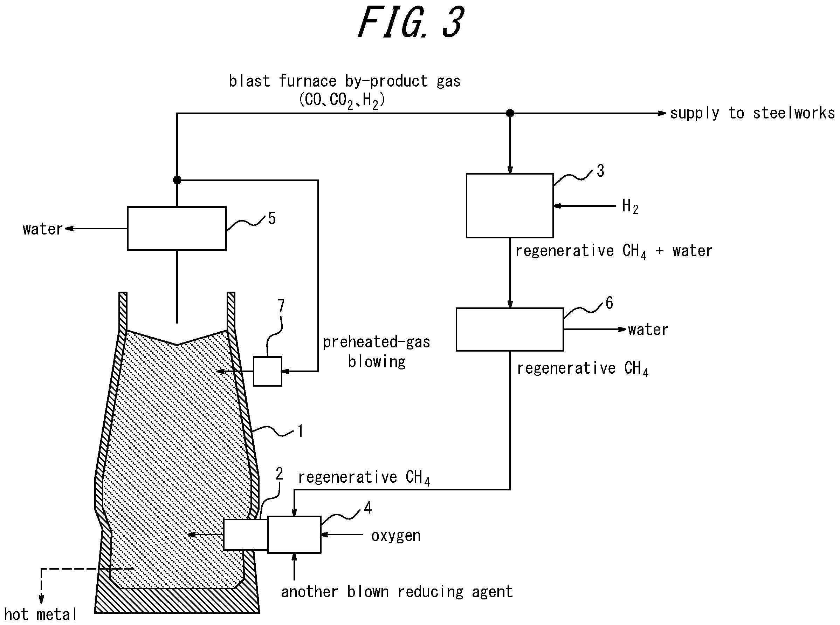

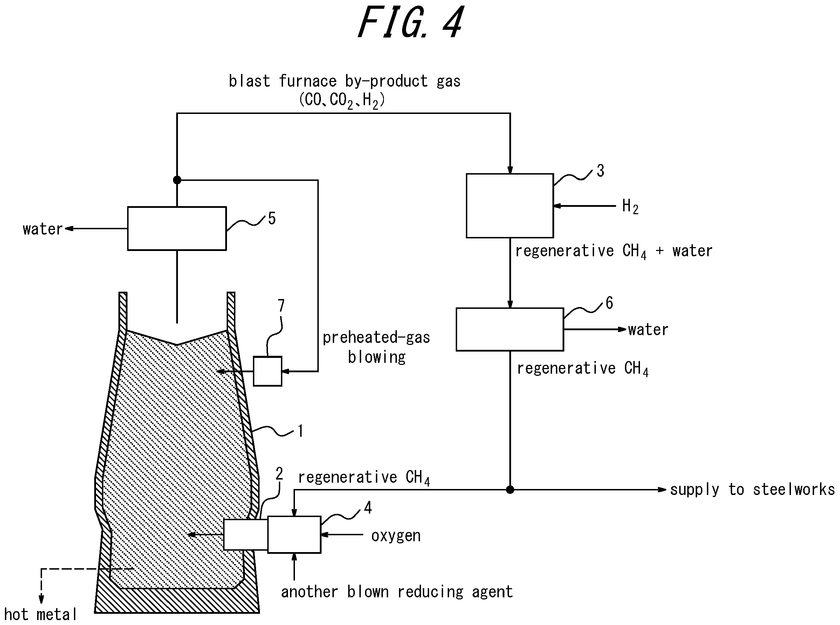

As illustrated in FIG. 3, the regenerative methane gas may be generated from a part of the blast furnace by-product gas and a surplus of the blast furnace by-product gas may be supplied to the steelworks. Furthermore, as illustrated in FIG. 4, if there is a surplus of the regenerative methane gas, the surplus may be supplied to the steelworks.

The blowing amount of oxygen gas and reducing agent, as well as other operating conditions, are not limited and can be appropriately determined according to the capacity of the blast furnace and the like.

[Blast furnace ancillary facility]

The blast furnace ancillary facility according to one of the disclosed embodiments is a blast furnace ancillary facility used in the method of operating a blast furnace as described above, comprising

a methane gas generation device that generates the regenerative methane gas from the by-product gas, and
a gas blowing device having a methane gas supply section that introduces the regenerative methane gas into the tuyere of the blast furnace and an oxygen gas supply section that introduces the oxygen gas into the tuyere of the blast furnace.

Here, the methane gas generation device has, for example, a blast furnace by-product gas intake section, a hydrogen gas intake section, and a reaction section. In the reaction section, the blast furnace by-product gas taken in from the blast furnace by-product gas intake section and the hydrogen gas taken in from the hydrogen gas intake section are reacted to produce the regenerative methane gas. Since the reaction to produce the methane gas generates heat, the reaction section is preferably equipped with a cooling mechanism.

As described above, for example, as illustrated in FIG. 2A, the gas blowing device comprises a coaxial multiple pipe having a central pipe 4-1 and an outer pipe 4-3. Then, the methane gas (regenerative methane gas and appropriately, external methane gas as described below) is introduced into the inner passage of the central pipe, which serves as the methane gas supply section (passage), and oxygen gas is introduced into the annular pipe passage between the central pipe 4-1 and the outer pipe 4-3, which serves as the oxygen gas supply section (passage).

Another blown reducing agent, for example, pulverized coal, waste plastics, or reducing gas such as hydrogen gas or carbon monoxide gas, may be used together.

When the another blown reducing agent is used, it may also be introduced into the methane gas supply section. When using pulverized coal or waste plastics as the another blown reducing agent, it is preferable to provide, separately from the methane gas supply section, another reducing agent supply section (passage) through which the pulverized coal or waste plastics flow. In this case, as illustrated in FIG. 2B, for example, the gas blowing device comprises a coaxial multiple pipe having, in addition to the central pipe 4-1 and outer pipe 4-3, an inner pipe 4-2 provided between the central pipe 4-1 and outer pipe 4-3. Then, the another blown reducing agent such as pulverized coal or waste plastics is introduced from the inner passage of the central pipe, which serves as the another reducing agent supply section. Further, methane gas is introduced from the annular pipe passage between the central pipe 4-1 and the outer pipe 4-3, which is the methane gas supply section, and oxygen is introduced from the annular pipe passage between the inner pipe 4-2 and the outer pipe 4-3, which is the oxygen gas supply section.

EXAMPLES

Using the blast furnace and blast furnace ancillary facility schematically illustrated in FIGS. 1 and 3 to 7, blast furnace operation was conducted under the conditions listed in Table 1, and the tuyere-outlet temperature and carbon dioxide emissions from the blast furnace during operation were evaluated. The evaluation results are also listed in Table 1.

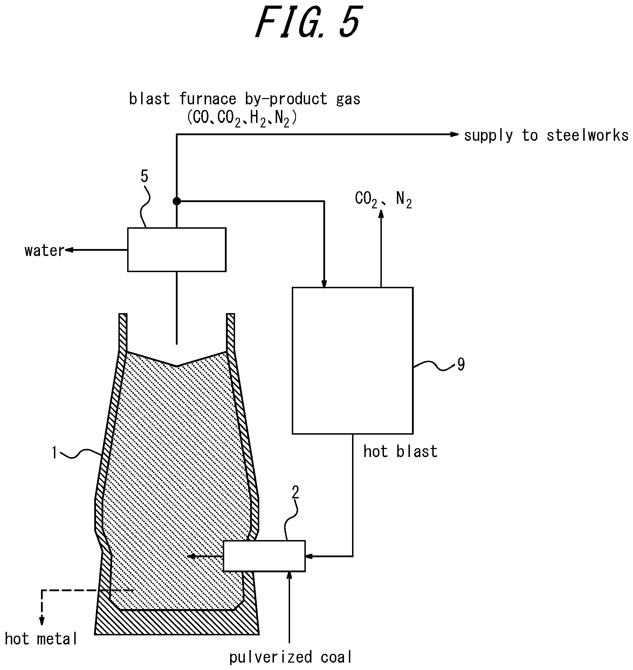

In FIGS. 5-7, reference sign 9 is a hot air oven, 10 is a gas separation device, and 11 is a dehydration device for hot air oven exhaust gas.

In Example 1, the blast furnace and blast furnace ancillary facility schematically illustrated in FIG. 1 were used to generate a regenerative methane gas from a part of a blast furnace by-product gas, and a surplus of the blast furnace by-product gas was supplied to a steelworks. The whole of the blown reducing agent was the regenerative methane gas, and a surplus of the regenerative methane gas was supplied to the steelworks.

In Example 2, the blast furnace and blast furnace ancillary facility schematically illustrated in FIG. 3 were used to generate a regenerative methane gas from a part of a blast furnace by-product gas, and a surplus of the blast furnace by-product gas was supplied to a steelworks. The whole of the blown reducing agent was the regenerative methane gas, and the amount of the regenerative methane gas generated was adjusted so that no surplus of the regenerative methane gas was generated.

In Example 3, the blast furnace and blast furnace ancillary facility schematically illustrated in FIG. 4 were used to generate a regenerative methane gas from the whole of a blast furnace by-product gas. The whole of the blown reducing agent was the regenerative methane gas, and a surplus of the regenerative methane gas was supplied to the steelworks.

In Examples 4 and 5, the blast furnace and blast furnace ancillary facility schematically illustrated in FIG. 3 were used to generate a regenerative methane gas from a part of a blast furnace by-product gas, and a surplus of the blast furnace by-product gas was supplied to a steelworks. As the blown reducing agent, in addition to the regenerative methane gas, an external methane gas derived from fossil fuels was also used .

On the other hand, in Comparative Example 1, the blast furnace and blast furnace ancillary facility schematically illustrated in FIG. 5 were used. In detail, Comparative Example 1 is a general method of operating a blast furnace that uses hot blast (air heated to about 1200 °C (oxygen concentration: about 21 % to 25 % by volume)) as the blast gas and pulverized coal as the blown reducing agent. A regenerative methane gas was not produced from a blast furnace by-product gas.

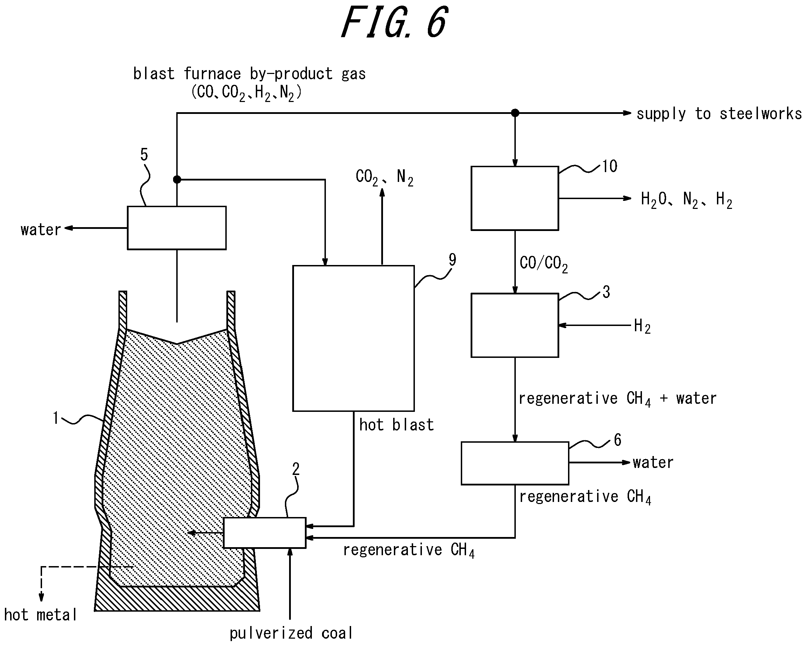

In Comparative Example 2, the blast furnace and blast furnace ancillary facility schematically illustrated in FIG. 6 were used. Hot blast (air heated to about 1200 °C (oxygen concentration: about 21 % to 25 % by volume)) was used as the blast gas and a regenerative methane gas was used as the blown reducing agent. Before generating the regenerative methane gas, carbon monoxide and carbon dioxide were separated from a blast furnace by-product gas, and the regenerative methane gas was generated from the separated carbon monoxide and carbon dioxide.

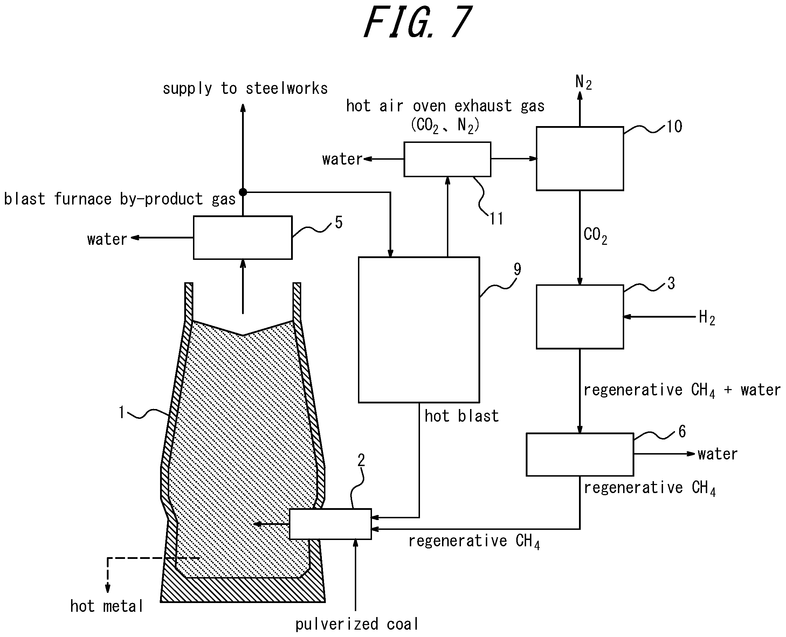

In Comparative Example 3, the blast furnace and blast furnace ancillary facility schematically illustrated in FIG. 7 were used. Hot blast (air heated to about 1200 °C (oxygen concentration: about 21 % to 25 % by volume)) was used as the blast gas and a regenerative methane gas was used as the blown reducing agent. In the generation of the regenerative methane gas, a by-product gas of a hot air oven (hereinafter also referred to as hot air oven exhaust gas) was used instead of a blast furnace by-product gas. Then, carbon dioxide was separated from the hot air oven exhaust gas, and the regenerative methane gas was generated from the separated carbon dioxide.

In Comparative Example 4, the blast furnace and blast furnace ancillary facility schematically illustrated in FIG. 1 were used to generate a regenerative methane gas from a part of a blast furnace by-product gas, and a surplus of the blast furnace by-product gas was supplied to a steelworks. As the blown reducing agent, in addition to the regenerative methane gas, an external methane gas derived from fossil fuels was also used .

In Comparative Example 5, as with Comparative Example 2, the blast furnace and blast furnace ancillary facility schematically illustrated in FIG. 6 were used. Comparative Example 5 had the same conditions as Comparative Example 2, except that the blown methane gas ratio was increased.

For the purpose of comparison, the specifications of the blast furnaces were standardized as much as possible. In detail, the shaft efficiency was 94 % and the heat loss was 150000 kcal/t.

The unit "kcal/t" refers to the amount of heat loss (kcal) generated in producing 1 t of hot metal. Similarly, the unit "kg/t" used for coke rate, for example, means the amount of coke (kg) used to produce 1 t of hot metal, etc. Further, the unit "$Nm^3$/t" used for the blown methane ratio refers to the amount of methane ($Nm^3$) in the blown methane gas that is blown into the blast furnace to produce 1 t of hot metal (the blown methane ratio is the sum of the regenerative methane ratio and the external methane ratio, but the regenerative methane gas contains a small amount of remainder gas other than methane. The values of the regenerative methane ratio and external methane ratio listed in Table 1 are both methane amounts excluding the small amount of remainder gas other than methane and are obtained by rounding off one decimal place. Therefore, each of the blown methane ratios listed in Table 1 is sometimes different from the sum of the corresponding regenerative methane ratio and external methane ratio).

In addition, the item name of "Blast furnace Input C" in Table 1 refers to the mass (kg) of carbon atoms of external origin (specifically contained in coke, pulverized coal, and the external methane gas) used to produce 1 t of hot metal.

Table 1

| | | | Unit | Example 1 | Example 2 | Example 3 | Example 4 | Example 5 |
|---|---|---|---|---|---|---|---|---|
| Blast furnace specification | Shaft efficiency | | - | 0.94 | 0.94 | 0.94 | 0.94 | 0.94 |
| | Heat loss | | kcal/t | 150000 | 150000 | 150000 | 150000 | 150000 |
| | Coke rate | | kg/t | 338 | 338 | 338 | 338 | 338 |
| | Reducing agent (Brown reducing agent) | Pulverized coal ratio | kg/t | 0 | 0 | 0 | 0 | 0 |
| | | Blown methane ratio | Nm³/t | 200 | 200 | 200 | 200 | 200 |
| | | Regenerative methane ratio | Nm³/t | 200 | 200 | 200 | 103 | 112 |
| | | External methane ratio | Nm³/t | 0 | 0 | 0 | 98 | 88 |
| | Blast gas | Supply amount | Nm³/t | 321 | 321 | 321 | 321 | 321 |
| | | Supply temperature | °C | 25 | 25 | 25 | 25 | 25 |
| | | Type | - | oxygen gas | oxygen gas | oxygen gas | oxygen gas | oxygen gas |
| | | Oxygen concentration | % by volume | 100 | 100 | 100 | 100 | 100 |
| | Generation amount of blast furnace by-product gas | | Nm³/t | 1034 | 1034 | 1034 | 1034 | 1034 |
| Gas separation process | Presence/absence of separation process | | - | absent | absent | absent | absent | absent |
| | Gas type before separation | | - | - | - | - | - | - |
| | Gas amount before separation | | Nm³/t | - | - | - | - | - |
| | Gas type after separation | | - | - | - | - | - | - |
| | Gas amount after separation | | Nm³/t | - | - | - | - | - |

Table 1 (cont'd)

| | | | Example 1 | Example 2 | Example 3 | Example 4 | Example 5 |
|---|---|---|---|---|---|---|---|
| Methane gas generation process | Raw material gas type | - | Blast furnace by-product gas | Blast furnace by-product gas | Blast furnace by-product gas | Blast furnace by-product gas | Blast furnace by-product gas |
| | Raw material gas amount | Nm$^3$/t | 527 | 264 | 1034 | 135 | 147 |
| | Hydrogen gas supply amount | Nm$^3$/t | 1301 | 651 | 2554 | 334 | 364 |
| | Generation amount of regenerative methane gas | Nm$^3$/t | 402 | 201 | 788 | 103 | 112 |
| | Methane concentration of regenerative methane gas | % by volume | 99.6 | 99.6 | 99.6 | 99.6 | 99.6 |
| Gas distribution | Amount of regenerative methane gas in blown methane gas | Nm$^3$/t | 201 | 201 | 201 | 103 | 112 |
| | Surplus amount of regenerative methane gas (supply amount to steelworks) | Nm$^3$/t | 201 | 0 | 587 | 0 | 0 |
| | Surplus amount of blast furnace by-product gas (supply amount to steelworks) | Nm$^3$/t | 507 | 770 | 0 | 899 | 886 |
| C balance | Consumption rate of circulating carbon atoms | kg/t | 107 | 107 | 107 | 55 | 60 |
| | Blast furnace Input C | kg/t | 290 | 290 | 290 | 343 | 338 |
| Evaluation results | Amount of $CO_2$ emitted from blast furnace to outside | kg/t | 1064 | 1064 | 1064 | 1256 | 1238 |
| | Tuyere-outlet temperature | °C | 2046 | 2046 | 2046 | 2046 | 2046 |

EP 4 067 508 A1

(continued)

| | | | | Comparative Example 1 | Comparative Example 2 | Comparative Example 3 | Comparative Example 4 | Comparative Example 5 |
|---|---|---|---|---|---|---|---|---|
| Blast furnace specification | Shaft efficiency | | - | 0.94 | 0.94 | 0.94 | 0.94 | 0.94 |
| | Heat loss | | kcal/t | 150000 | 150000 | 150000 | 150000 | 150000 |
| | Coke rate | | kg/t | 331 | 410 | 410 | 338 | 406 |
| | Reducing agent (Brown reducing agent) | Pulverized coal ratio | kg/t | 170 | 0 | 0 | 0 | 0 |
| | | Blown methane ratio | $Nm^3/t$ | 0 | 97 | 97 | 200 | 103 |
| | | Regenerative methane ratio | $Nm^3/t$ | 0 | 97 | 97 | 75 | 103 |
| | | External methane ratio | $Nm^3/t$ | 0 | 0 | 0 | 126 | 0 |
| | Blast gas | Supply amount | $Nm^3/t$ | 1006 | 1053 | 1053 | 321 | 1057 |
| | | Supply temperature | °C | 1200 | 1200 | 1200 | 25 | 1200 |
| | | Type | - | hot blast | hot blast | hot blast | oxygen gas | hot blast |
| | | Oxygen concentration | % by volume | 25 | 25 | 25 | 100 | 25 |
| | Generation amount of blast furnace by-product gas | | $Nm^3/t$ | 1517 | 1587 | 1587 | 1034 | 1594 |
| Gas separation process | Presence/absence of separation process | | - | absent | present | present | absent | present |
| | Gas type before separation | | - | - | Blast furnace by-product gas | hot air oven exhaust gas | - | Blast furnace by-product gas |
| | Gas amount before separation | | $Nm^3/t$ | - | 232 | 704 | - | 246 |
| | Gas type after separation | | - | - | $CO, CO_2$ | $CO_2$ | - | $CO, CO_2$ |
| | Gas amount after separation | | $Nm^3/t$ | - | 97 | 179 | - | 103 |

(continued)

| | | | Comparative Example 1 | Comparative Example 2 | Comparative Example 3 | Comparative Example 4 | Comparative Example 5 |
|---|---|---|---|---|---|---|---|
| Methane gas generation process | Raw material gas type | - | - | - | C0, $CO_2$ | $CO_2$ | blast furnace by-product gas | C0, $CO_2$ |
| | Raw material gas amount | $Nm^3/t$ | - | 97 | 179 | 98 | 103 |
| | Hydrogen gas supply amount | $Nm^3/t$ | - | 342 | 715 | 243 | 360 |
| | Generation amount of regenerative methane gas | $Nm^3/t$ | - | 97 | 179 | 75 | 103 |
| | Methane concentration of regenerative methane gas | % by volume | - | 100.0 | 100.0 | 99.6 | 100.0 |
| Gas distribution | Amount of regenerative methane gas in blown methane gas | $Nm^3/t$ | - | 97 | 97 | 75 | 103 |
| | Surplus amount of regenerative methane gas (supply amount to steelworks) | $Nm^3/t$ | - | 0 | 81 | 0 | 0 |
| | Surplus amount of blast furnace by-product gas (supply amount to steelworks) | $Nm^3/t$ | 1144 | 960 | 1192 | 935 | 951 |
| C balance | Consumption rate of circulating carbon atoms | kg/t | 0 | 52 | 52 | 40 | 55 |
| | Blast furnace Input C | kg/t | 420 | 353 | 353 | 358 | 349 |
| Evaluation results | Amount of $CO_2$ emitted fromblast furnace to outside | kg/t | 1539 | 1293 | 1293 | 1311 | 1279 |
| | Tuyere-outlet temperature | °C | 2179 | 2000 | 2000 | 2046 | 1978 |

As indicated in Table 1, in all of the examples, the amount of carbon dioxide emitted from the blast furnace to the outside could be reduced while maintaining stable blast furnace operation by controlling the tuyere-outlet temperature in the range of 2000 °C to 2400 °C. In particular, in Examples 1 to 3, the amount of carbon dioxide emitted from the blast furnace to the outside could be significantly reduced.

On the other hand, Comparative Examples 1 to 4 did not provide sufficient carbon dioxide emission reduction effect. In Comparative Example 5, the blast furnace could not be stably operated because the tuyere-outlet temperature was lower than 2000 °C due to the increase in the amount of blown methane gas.

REFERENCE SIGNS LIST

1: blast furnace
2: tuyere
3: methane gas generation device
4: gas blowing device
4-1: central pipe
4-2: inner pipe
4-3: outer pipe
5: first dehydration device
6: second dehydration device
7: burner
8: raceway
9: hot air oven
10: gas separation device
11: dehydration device for hot air oven exhaust gas

**Claims**

1. A method of operating a blast furnace, comprising

   generating a regenerative methane gas from a by-product gas discharged from the blast furnace, and
   blowing a blast gas and a reducing agent into the blast furnace from a tuyere,
   wherein the blast gas is oxygen gas and the regenerative methane gas is used as at least part of the reducing agent.

2. The method of operating a blast furnace according to claim 1, wherein a consumption rate of circulating carbon atoms in the reducing agent is 60 kg/t or more,
   wherein the consumption rate of circulating carbon atoms is a carbon equivalent mass of the regenerative methane gas that is blown into the blast furnace as the reducing agent for producing 1 t of hot metal, and is obtained by the following equation:

$$\text{[Consumption rate of circulating carbon atoms (kg/t)]} = \text{[Mass of methane in regenerative methane gas blown into blast furnace as reducing agent (kg)]} \times (12/16) \div \text{[Production amount of hot metal (t)]}.$$

3. The method of operating a blast furnace according to claim 1 or 2, wherein the oxygen gas has an oxygen concentration of 80 % or more by volume.

4. The method of operating a blast furnace according to any one of claims 1 to 3, wherein the regenerative methane gas is generated from a part of the by-product gas and a surplus of the by-product gas is supplied to a steelworks.

5. The method of operating a blast furnace according to any one of claims 1 to 4, wherein a surplus of the regenerative methane gas is supplied to the steelworks.

6. A blast furnace ancillary facility used in the method of operating a blast furnace according to any one of claims 1 to 5, comprising

a methane gas generation device that generates the regenerative methane gas from the by-product gas, and a gas blowing device having a methane gas supply section that introduces the regenerative methane gas into the tuyere of the blast furnace and an oxygen gas supply section that introduces the oxygen gas into the tuyere of the blast furnace.

# FIG. 1

blast furnace by-product gas
($CO$、$CO_2$、$H_2$)

→ supply to steelworks

water ←  [5]

[3]  ← $H_2$

regenerative $CH_4$ + water

[7]  preheated-gas
blowing

[6]  → water

regenerative $CH_4$

[1]

regenerative $CH_4$

[2]

[4]  ← oxygen

→ supply to steelworks

another blown reducing agent

hot metal

EP 4 067 508 A1

FIG. 2A

FIG. 2B

FIG. 3

# FIG. 4

blast furnace by-product gas
($CO$、$CO_2$、$H_2$)

water ← [5]

[7]

preheated-gas
blowing

[1]

regenerative $CH_4$

[2]

another blown reducing agent

hot metal

[3] ← $H_2$

regenerative $CH_4$ + water

[6] → water

regenerative $CH_4$

[4] ← oxygen

regenerative $CH_4$ → supply to steelworks

EP 4 067 508 A1

# FIG. 5

blast furnace by-product gas
($CO、CO_2、H_2、N_2$)

supply to steelworks

$CO_2、N_2$

5

water◄

9

hot blast

1

2

hot metal

pulverized coal

# FIG. 6

blast furnace by-product gas
($CO$、$CO_2$、$H_2$、$N_2$)

supply to steelworks

5

water

$CO_2$、$N_2$

10

$H_2O$、$N_2$、$H_2$

$CO/CO_2$

9

3

$H_2$

hot blast

1

regenerative $CH_4$ + water

6

water

2

regenerative $CH_4$

regenerative $CH_4$

hot metal

pulverized coal

EP 4 067 508 A1

# FIG. 7

supply to steelworks

hot air oven exhaust gas
($CO_2$、$N_2$)

$N_2$

10

water ←

blast furnace by-product gas

11

water ←  5

1

9

$CO_2$

3

← $H_2$

hot blast

regenerative $CH_4$ + water

6

→ water

2

regenerative $CH_4$

regenerative $CH_4$

hot metal

pulverized coal

# FIG. 8

**INTERNATIONAL SEARCH REPORT**

| International application No. |
|---|
| PCT/JP2020/042144 |

A. CLASSIFICATION OF SUBJECT MATTER
Int. Cl. C21B5/00(2006.01)i, C21B7/00(2006.01)i
FI: C21B5/00 321, C21B7/00 312

According to International Patent Classification (IPC) or to both national classification and IPC

B. FIELDS SEARCHED

Minimum documentation searched (classification system followed by classification symbols)
Int. Cl. C21B5/00, C21B7/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-261095 A (NPO SEITETSU CARBON OFFSET GIJUTSU KENKYUKAI) 18 November 2010, claims 5, 6, paragraphs [0001], [0009]-[0011], [0017]-[0023], fig. 1-3 | 1-6 |
| Y | JP 63-171804 A (NKK CORP.) 15 July 1988, claims 1, 2, page 1, lower left column, line 17, to page 2, upper left column, line 19, page 2, lower right column, line 15 to page 3, lower left column, line 2, all drawings | 1-6 |
| A | JP 07-167569 A (GAS RESARCH INSTITUTE) 04 July 1995, entire text | 1-6 |

☒ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.12.2020 | 15.12.2020 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2020/042144 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 49-008608 B1 (AIRCO INCORPORATED) 27 February 1974, entire text | 1-6 |

Form PCT/ISA/210 (continuation of second sheet) (January 2015)

INTERNATIONAL SEARCH REPORT

Information on patent family members

International application No.

PCT/JP2020/042144

| Patent Documents referred to in the Report | Publication Date | Patent Family | Publication Date |
|---|---|---|---|
| JP 2010-261095 A | 18.11.2010 | (Family: none) | |
| JP 63-171804 A | 15.07.1988 | (Family: none) | |
| JP 07-167569 A | 04.07.1995 | US 5431709 A entire text EP 644269 A1 | |
| JP 49-008608 B1 | 27.02.1974 | US 3547624 A entire text DE 1583213 A | |

Form PCT/ISA/210 (patent family annex) (January 2015)

**EP 4 067 508 A1**

**Patent documents cited in the description**

- JP 2011225969 A
- JP 2014005510 A